# EUROPÄISCHE PATENTSCHRIFT

(11) **EP 2 042 910 B1**
(45) Veröffentlichungstag und Bekanntmachung des Hinweises auf die Patenterteilung: **19.05.2010**
(21) Anmeldenummer: 07117542.6
(22) Anmeldetag: 28.09.2007
(51) Int. Cl.: G02C 1/02

(54) **Verbindungselement für eine randlose Brille**
Connecting element for frameless spectacles
Elément de liaison pour une lunette sans bord

(43) Veröffentlichungstag der Anmeldung: 01.04.2009
(73) Patentinhaber: Anger, Wilhelm, 5020 Salzburg (AT)
(72) Erfinder: Anger, Wilhelm, 5020 Salzburg (AT)
(74) Vertreter: TBK-Patent

(56) Entgegenhaltungen:
- EP-A- 1 193 533
- EP-A- 1 584 967
- DE-A1- 3 239 699
- GB-A- 2 382 665
- JP-A- 11 249 079
- US-A- 5 646 706
- US-A- 5 861 933
- US-B1- 6 523 952

## Beschreibung

Die Erfindung bezieht sich auf ein Verbindungselement zum Verbinden einer Backe oder einer Brücke mit einem Brillenglas einer randlosen Brille mit den Merkmalen des Oberbegriffs von Patentanspruch 1.

Ein solches Verbindungselement ist bekannt (GB 2382665 A und JP 11249079 A). Das bekannte Verbindungselement wird an seiner Anlagefläche mit dem Rand (GB 2382665 A) oder mit dem Rand und der Vorderseite (JP 11249079 A) eines Brillenglases einer randlosen Brille mittels eines Klebstoffs verklebt. Die Ausnehmung des bekannten Verbindungselementes nimmt einen Endabschnitt der Backe oder der Brücke auf, wobei dieser Endabschnitt in der Ausnehmung beispielsweise mittels eines Klebstoffs fixiert wird. Auf diese Weise kann die Backe bzw. die Brücke am Brillenglas befestigt werden. Kräfte, die von der Backe bzw. der Brücke auf das Brillenglas einwirken, werden zu diesem über die Anlagefläche des Verbindungselements übertragen. Der relativ große Flächeninhalt der Anlagefläche und die Ausbildung des Verbindungselementes aus Kunststoff haben zur Folge, dass bei dieser Kraftübertragung nur geringe Spannungen im Brillenglas erzeugt werden. Das Verbindungselement hat somit eine gewisse Puffer- bzw. Dämpfungswirkung, die das Brillenglas vor Brüchen schützt. Ferner ermöglicht das bekannte Verbindungselement, die Backe oder die Brücke auch dann am Brillenglas mittels einer Kleberverbindung zu befestigen, wenn sich die Werkstoffpaarung aus dem Werkstoff des Brillenglases und dem Werkstoff der Backe bzw. der Brücke nicht für eine dauerhaft feste Klebeverbindung eignet.

Bei dem bekannten Verbindungselement ist vorgesehen, dass der Endabschnitt der Backe bzw. der Brücke in die Ausnehmung des Verbindungselementes eingeschoben wird. Dadurch sind die Gestalt der Ausnehmung und die Gestalt des Endabschnitts auf solche Formen beschränkt, die ein Einschieben bzw. Einstecken des Endabschnitts in die Ausnehmung ermöglichen. Dies erschwert es, die Ausnehmung so zu gestalten, dass eine dauerhafte und feste Verbindung zwischen dem von der Ausnehmung aufgenommenen Endabschnitt der Backe bzw. der Brücke und dem Verbindungselement erreicht wird. Zudem erschwert dies die Herstellung einer Klebeverbindung zwischen dem Endabschnitt und dem Verbindungselement, wenn der in die Ausnehmung eingeschobene Endabschnitt mit dem Verbindungselement verklebt werden soll.

Der Erfindung liegt die Aufgabe zugrunde, ein Verbindungselement zu schaffen, das es ermöglicht bzw. erleichtert, den Endabschnitt der Backe bzw. der Brücke mit dem Verbindungselement dauerhaft und fest zu verbinden.

Diese Aufgabe wird durch das Verbindungselement gemäß Patentanspruch 1 gelöst. Erfindungsgemäß ist vorgesehen, dass das Verbindungselement in ein Unterteil, an dem die Anlagefläche ausgebildet ist, und ein Oberteil unterteilt ist, wobei das Oberteil und Unterteil jeweils eine Innenfläche aufweisen und die beiden Innenflächen einander zugewandt sind, und dass die beiden Innenflächen jeweils eine Kontaktfläche und eine Wandfläche aufweisen, wobei die Kontaktflächen komplementär zueinander ausgebildet sind und das Oberteil und das Unterteil an ihren Kontaktflächen miteinander verbunden sind und wobei die Wandflächen gemeinsam die Ausnehmung begrenzen.

Das erfindungsgemäße Element ist somit zweigeteilt in das Unterteil und das Oberteil. Derjenige Zustand des Verbindungselementes, in dem die Kontaktflächen in Kontakt miteinander stehen und miteinander verbunden sind, wird hier als geschlossener Zustand des Verbindungselementes bezeichnet. Derjenige Zustand des Verbindungselementes, in dem die Kontaktflächen voneinander beabstandet sind und das Oberteil und das Unterteil an ihren Kontaktflächen noch nicht miteinander verbunden sind, wird hier als offener Zustand des Verbindungselementes bezeichnet. Im offenen Zustand bzw. bei offenem Verbindungselement liegen die beiden Wandflächen frei, die im geschlossenen Zustand gemeinsam die Ausnehmung begrenzen. Demzufolge kann bei diesem offenen Zustand der Endabschnitt der Backe bzw. Brücke an eine der beiden Wandflächen angelegt bzw. dann, wenn die Wandfläche eine Vertiefung begrenzt, in die Vertiefung eingelegt werden. Danach werden dann das Oberteil und das Unterteil an ihren Kontaktflächen in Kontakt miteinander gebracht und werden die Kontaktflächen miteinander verbunden, wodurch der geschlossene Zustand des Verbindungselementes herbeigeführt wird. Im geschlossenen Zustand ist dann der Endabschnitt der Backe bzw. der Brücke in der Ausnehmung eingeschlossen mit Ausnahme eines durch die Öffnung der Ausnehmung aus dem Verbindungselement herausragenden Übergangsabschnitts des Endabschnitts.

Wie sich aus der vorstehenden Erläuterung ergibt, kann bei dem erfindungsgemäßen Verbindungselement der Endabschnitt der Backe bzw. der Brücke bei noch offenem Verbindungselement an eine der Wandflächen, die im geschlossenen Zustand bzw. bei geschlossenem Verbindungselement die Ausnehmung begrenzen, angelegt werden bzw. in eine durch eine der Wandflächen begrenzte Vertiefung eingelegt werden. Dies ermöglicht es, die Ausnehmung und den Endabschnitt jeweils mit einer Gestalt auszubilden, die zu einer dauerhaft festen Verbindung zwischen dem Endabschnitt und dem Verbindungselement führt. Die Beschränkung auf Gestaltungen des Endabschnitts und der Ausnehmung, die ein Einschieben des Endabschnitts in die Ausnehmung ermöglichen, entfällt. Insbesondere ermöglicht es die Erfindung, den Endabschnitt und die Ausnehmung derart zu gestalten, dass sie eine formschlüssige Verbindung zwischen dem Verbindungselement und dem Endabschnitt zur Folge haben.

In vorteilhafter Ausbildung der Erfindung kann vorgesehen sein, dass das Oberteil und das Unterteil mittels eines Filmscharniers gelenkig miteinander derart verbunden sind, dass das Oberteil vor der Herstellung der Verbindung zwischen den beiden Kontaktflächen relativ zum Unterteil verschwenkbar ist. Die gelenkige Verbindung von Oberteil und Unterteil mittels des Filmscharniers erleichtert die Handhabung des Verbindungselementes in dessen offenem Zustand und erleichtert es ferner, das Oberteil und das Unterteil an ihren Kontaktflächen miteinander in Kontakt zu bringen, wenn nach dem Anlegen bzw. Einlegen des Endabschnitts an bzw. in eine der Wandflächen der geschlossene Zustand des Verbindungselementes hergestellt wird. Hierzu werden das Oberteil und das Unterteil relativ zueinander im Filmscharnier verschwenkt, wobei das Filmscharnier für genaue Positionierung der beiden Kontaktflächen aneinander sorgt.

Weitere vorteilhafte Ausgestaltungen der Erfindung sind in den abhängigen Ansprüchen definiert.

Im Folgenden wird die Erfindung anhand von in den Zeichnungen dargestellten Ausführungsbeispielen näher erläutert. Es zeigen:
Figur 1 eine perspektivische Ansicht einer randlosen Brille mit Verbindungselementen gemäß der Erfindung;
Figur 2 eine Seitenansicht eines Verbindungselementes gemäß einer ersten Ausführungsform der Erfindung;
Figur 3 eine Schnittdarstellung gemäß A-A in Figur 2;
Figur 4 eine Draufsicht auf das Verbindungselement gemäß Figur 2;
Figur 5 eine Draufsicht auf das Verbindungselement gemäß dem ersten Ausführungsbeispiel in einem offenen Zustand;
Figur 6 eine Seitenansicht, die das Verbindungselement gemäß dem ersten Ausführungsbeispiel im offenen Zustand und an einem Brillenglas befestigt zeigt;
Figur 7 eine perspektivische Ansicht einer Einheit aus dem Verbindungselement gemäß dem ersten Ausführungsbeispiel und einer Backe;
Figur 8 die Backe der Einheit gemäß Figur 7;
Figur 9 eine Seitenansicht eines Verbindungselement gemäß einer zweiten Ausführungsform der Erfindung;
Figur 10 eine Schnittdarstellung gemäß B-B in Figur 9;
Figur 11 eine Seitenansicht eines Verbindungselementes gemäß einem dritten Ausführungsbeispiel der Erfindung;
Figur 12 eine Seitenansicht eines Verbindungselementes gemäß einem vierten Ausführungsbeispiel der Erfindung;
Figur 13 eine Schnittdarstellung gemäß C-C in Figur 12;
Figur 14 eine Draufsicht auf das Verbindungselement gemäß dem vierten Ausführungsbeispiel in einem offenen Zustand;
Figur 15 in zu Figur 13 ähnlicher Darstellung eine Abwandlung des vierten Ausführungsbeispiels;
Figur 16 eine perspektivische Ansicht eines Verbindungselementes gemäß einem fünften Ausführungsbeispiel der Erfindung in einem offenen Zustand;
Figur 17 in zu Figur 3 ähnlicher Darstellung einen Schnitt durch das Verbindungselement gemäß dem fünften Ausführungsbeispiels im geschlossenen Zustand;
Figur 18 in zu Figur 17 ähnlicher Darstellung eine Abwandlung des fünften Ausführungsbeispiels;
Figuren 19 bis 24 Beispiele für die Gestalt einer Ausnehmung des erfindungsgemäßen Verbindungselementes;
Figur 25 ausschnittsweise und in perspektivischer Darstellung eine Backe, deren Endabschnitt zur Aufnahme in der Ausnehmung gemäß Figur 24 bestimmt ist;
Figuren 26 und 27 weitere Bespiele für die Gestalt der Ausnehmung des erfindungsgemäßen Verbindungselementes;
Figur 28 in zu Figur 3 in ähnlicher Darstellung einen Schnitt durch ein Verbindungselement mit der Ausnehmung gemäß Figur 27 mit einem darin aufgenommenen Endabschnitt;
Figur 29 eine perspektivische Darstellung eines sechsten Ausführungsbeispiels des erfindungsgemäßen Verbindungselementes;
Figur 30 eine perspektivische Darstellung eines siebenten Ausführungsbeispiels des erfindungsgemäßen Verbindungselementes;
Figur 31 eine perspektivische Darstellung eines achten Ausführungsbeispiels eines erfindungsgemäßen Verbindungselementes;
Figur 32 eine perspektivische Darstellung eines neunten Ausführungsbeispieles des erfindungsgemäßen Verbindungselementes; und
Figur 33 eine perspektivische Darstellung eines zehnten Ausführungsbeispiels des erfindungsgemäßen Verbindungselementes.

In den Figuren sind gleiche bzw. einander entsprechende Elemente und Teile mit den gleichen Bezugszeichen versehen.

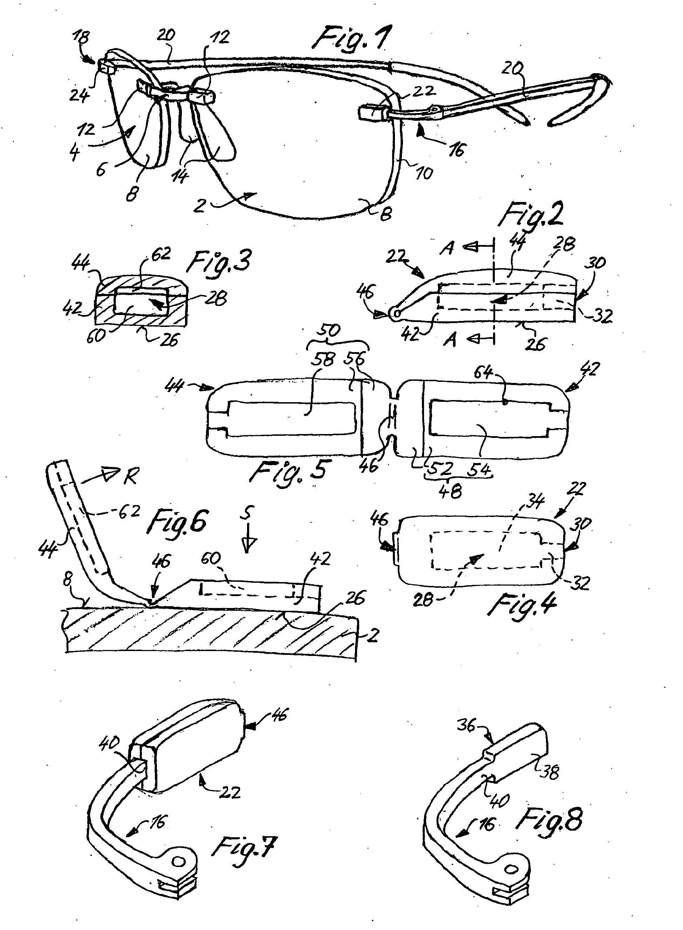

Figur 1 zeigt in perspektivischer Darstellung eine randlose Brille, die mit Verbindungselementen gemäß der Erfindung versehen ist. Diese Brille umfasst ein linkes Brillenglas 2, ein rechtes Brillenglas 4 und eine zwischen den beiden Brillengläsern angeordnete Brücke 6. Jedes der beiden Brillengläser 2 und 4 hat eine in Figur 1 sichtbare Vorderseite 8, eine in Figur 1 nicht sichtbare Rückseite und einen umlaufenden Rand 10, der das Brillenglas radial außen, bezogen auf seinen optischen Mittelpunkt, begrenzt. Die Brücke 6 ist ein langgestrecktes Element, das zwischen den beiden Brillengläsern 2 und 4 angeordnet ist, mit diesen jeweils mittels eines Verbindungselementes 12 verbunden ist und auf diese Weise die beiden Brillengläser miteinander verbindet. Ein Stegbauteil 14 ist an der Brücke 6 befestigt und dient zur Abstützung der Brille auf der Nase des Brillenträgers.

Die Brille weist ferner eine linke Backe 16 und eine rechte Backe 18 auf. Die Backen 16 und 18 sind jeweils mit einem Bügel 20 derart gelenkig verbunden, dass die Bügel 20 aus ihren in Figur 1 dargestellten geöffneten Stellungen geschwenkt werden können in Stellungen, in denen sie im Wesentlichen parallel zu den beiden Brillengläsern 2 und 4 verlaufen. Die linke Backe 16 ist mittels eines Verbindungselementes 22 mit dem linken Brillenglas 2 an dessen von der Brücke 6 abgewandtem Randbereich verbunden. Die rechte Backe 18 ist mittels eines Verbindungselementes 24 mit dem rechten Brillenglas 4 an dessen von der Brücke 6 abgewandtem Randbereich verbunden. Die Verbindungselemente 12, 22 und 24 sind gemäß der Erfindung ausgebildet und haben jeweils die gleiche Ausbildung.

Die Brücke 6 und die Backen 16 und 18 sind aus einem an sich bekannten Kunststoffwerkstoff oder metallischen Werkstoff gefertigt.

Im Folgenden wird unter Bezugnahme auf die Figuren 1 bis 8 ein erstes Ausführungsbeispiel des erfindungsgemäßen Verbindungselementes erläutert, wobei diese Erläuterung sich auf das Verbindungselement 22 und die Backe 16 bezieht, jedoch in gleicher Weise für die Verbindungselemente 12 und die Brücke 6 und das Verbindungselement 24 und die Backe 18 gilt.

Figur 2 zeigt das Verbindungselement 22 in Seitenansicht, d. h. bei Betrachtung von unten in Figur 1. Figur 3 zeigt einen Schnitt gemäß A-A in Figur 2, und Figur 4 zeigt eine Draufsicht auf das Verbindungselement 22. Wie die Figuren 2 bis 4 zeigen, hat das Verbindungselement 22 im Wesentlichen die Form eines Quaders und weist es eine Anlagefläche 26 auf, die die Unterseite des Quaders bildet. Die Anlagefläche 26 ist zur Anlage an und zum Verkleben mit dem Brillenglas 2 auf dessen Vorderseite 8 bestimmt (siehe Figur 6). Die Anlagefläche 26 ist im Wesentlichen eben ausgebildet, kann jedoch eine geringe Krümmung zur Anpassung an die üblicherweise gekrümmte Vorderseite 8 des Brillenglases 2 haben.

Innerhalb des Verbindungselementes 22 ist eine Ausnehmung 28 ausgebildet, die bei dem dargestellten Ausführungsbeispiel im Wesentlichen die Form eines flachen Quaders hat. Mit Ausnahme einer Öffnung 30, an der die Ausnehmung 28 nach außerhalb des Verbindungselementes 22 offen ist, ist die Ausnehmung 28 allseits umschlossen. Nahe der Öffnung 30 weist die Ausnehmung 28 einen verengten Übergangsabschnitt 32 auf, der eine geringere Querschnittsfläche als ein Hauptabschnitt 34 der Ausnehmung 28 hat. Die Ausnehmung 28 ist dazu bestimmt, einen komplementär zu der Ausnehmung 28 gestalteten Endabschnitt 36 der Backe 16 aufzunehmen, der wie die Ausnehmung 28 einen Hauptabschnitt 38 und einen Übergangsabschnitt 40 aufweist (siehe Figur 8). Wenn der Endabschnitt 38 in der Ausnehmung 28 angeordnet ist, sitzt der Hauptabschnitt 38 des Endabschnitts 36 im Hauptabschnitt 34 der Ausnehmung 28 und sitzt der Übergangsabschnitt 40 des Endabschnitts 36 im Übergangsabschnitt 32 der Ausnehmung 38, wobei der Übergangsabschnitt 40 des Endabschnitts 36 durch die Öffnung 30 hindurch aus dem Verbindungselement 22 herausragt (siehe Figur 7).

Das Verbindungselement gemäß dem ersten Ausführungsbeispiel ist ein einstückig aus einem Kunststoff spritzgegossenes Teil. Vorzugsweise ist der verwendete Kunststoff flexibel und hat er eine geringe Härte, die vorzugsweise im Bereich von 40 bis 60 Shore D liegt. Als geeigneter Kunststoff hat sich ein aliphatisches, thermoplastisches Polyether-Polyurethan erwiesen. Die Verwendung eines vergleichsweise weichen Kunststoffs zur Fertigung des Verbindungselementes hat einerseits die schon einleitend erläuterte Pufferwirkung zur Folge und ermöglicht es andererseits, dass die Anlagefläche 26, wenn sie an die Vorderseite 8 des Brillenglases 2 angedrückt wird, sich der Krümmung der Vorderseite 8 anpassen kann. Der Kunststoff kann sowohl opak als auch transparent sein. Bei Verwendung eines transparenten Kunststoffs bleibt der im Verbindungselement 22 bzw. dessen Ausnehmung 28 aufgenommene Endabschnitt sichtbar. Dies ist zweckmäßig, wenn der Endabschnitt mit einer Verzierung und/oder einer Marke versehen ist.

Das Verbindungselement 22 ist unterteilt in ein Unterteil 42, an dem die Anlagefläche 26 ausgebildet ist, und ein Oberteil 44, das mit dem Unterteil 42 mittels eines Filmscharniers 46 verbunden ist, das bei dem dargestellten Ausführungsbeispiel einstückig mit dem Unterteil 42 und dem Oberteil 44 ausgebildet ist. Das Filmscharnier 46 ist im Bereich derjenigen Seite des Verbindungselementes 22 angeordnet, die der Seite, in der die Öffnung 30 ausgebildet ist, gegenüberliegt, und ist ferner im Wesentlichen am Rand der Anlagefläche 26 ausgebildet, so dass das Filmscharnier 46 dann, wenn das Verbindungselement 22 mit seiner Anlagefläche 26 am Brillenglas 2 befestigt ist, praktisch nicht sichtbar ist.

Die Figuren 2 bis 4 zeigen das Verbindungselement 22 in seinem geschlossenen Zustand, in dem das Unterteil 42 und das Oberteil 44 nicht nur mittels des Filmscharniers 46, sondern auch an im Folgenden näher erläuterten Kontaktflächen miteinander verbunden sind. Figur 5 zeigt das Verbindungselement in Draufsicht in einem offenen Zustand, in dem das Oberteil 44 relativ zum Unterteil 42 soweit weggeschwenkt ist, dass das Oberteil 44 in im Wesentlichen gerader Verlängerung des Oberteils 42 angeordnet ist. Erst nachdem der Endabschnitt 36 in der Ausnehmung 28 angeordnet worden ist, wird das Verbindungselement 22 in seinen endgültigen, geschlossenen Zustand gebracht.

In Figur 5 sind eine Innenfläche 48 des Unterteils 42 und eine Innenfläche 50 des Oberteils 44 sichtbar. Diese beiden Innenflächen 48 und 50 sind bei geschlossenem Verbindungselement 22 einander zugewandt und werden hier als Innenflächen bezeichnet, weil sie bei geschlossenem Verbindungselement 22 im Inneren desselben liegen. Die Innenfläche 48 umfasst eine Kontaktfläche 52 und eine Wandfläche 54. Die Innenfläche 50 umfasst eine Kontaktfläche 56 und eine Wandfläche 58. Die beiden Kontaktflächen 52 und 56 sind komplementär zueinander ausgebildet. Bei geschlossenem Verbindungselement befinden sich die beiden Kontaktflächen 52 und 56 im Kontakt miteinander und sind das Oberteil 44 und das Unterteil 42 an diesen Kontaktflächen 52 und 56 miteinander fest verbunden. Diese feste Verbindung kann beispielsweise durch Verkleben oder Verschweißen der beiden Kontaktflächen 52 und 56 miteinander bewirkt sein.

Die Wandfläche 54 begrenzt eine im Unterteil 42 ausgebildete Vertiefung 60. Die Wandfläche 58 begrenzt eine im Oberteil 44 ausgebildete Vertiefung 62 (siehe Figuren 3 und 6). Die beiden Vertiefungen 60 und 62 bilden bei geschlossenem Verbindungselement gemeinsam die Ausnehmung 28. Wie Figur 5 zeigt, umgibt die Kontaktfläche 52 U-förmig die Wandfläche 54 und die von dieser begrenzte Vertiefung 60 und umgibt die Kontaktfläche 56 U-förmig die Wandfläche 58 und die dadurch begrenzte Vertiefung 62. Bei dem beschriebenen Ausführungsbeispiel besteht die Kontaktfläche 52 aus einem im Wesentlichen parallel zur Anlagefläche 26 verlaufenden, die Wandfläche 54 umgebenden Abschnitt und einem von diesem Abschnitt schräg nach unten in Richtung zum Filmscharnier 46 verlaufenden Abschnitt. Die Kontaktfläche 56 weist diesen Abschnitten entsprechende Abschnitte auf.

Um mittels des Verbindungselementes 22 die Backe 16 am Brillenglas 2 zu befestigen, kann zunächst das Unterteil 42 an das Brillenglas 2 auf dessen Vorderseite 8 mittels eines Klebstoffs angeklebt werden, während sich das Verbindungselement 22 noch in seinem offenen Zustand befindet. Dadurch ergibt sich der in Figur 6 dargestellte Zustand. Das Ankleben des Verbindungselementes 22 an das Brillenglas 2 ist dadurch erleichtert, dass das von der Vorderseite 8 wegstehende Oberteil 44 gefasst und manipuliert werden kann, um das Unterteil 42, das mit dem Oberteil 44 mittels des Filmscharniers 46 verbunden ist, in die erforderliche Sollstellung am Brillenglas 2 zu bringen und während des Verklebens in dieser Sollstellung zu halten. Nachdem das Unterteil 42 am Brillenglas 2 befestigt worden ist, wird der Endabschnitt 36 des Bügels 16 in die Vertiefung 60 im Unterteil 42 eingelegt. Danach wird das Oberteil 44 in Richtung R (siehe Figur 6) geschwenkt, bis die beiden Kontaktflächen 52 und 56 aneinander anliegen. Dabei gelangt der aus der Vertiefung 60 herausragende Abschnitt des Endabschnitts 36 in die Vertiefung 62 im Oberteil 44, so dass der Endabschnitt 36 in der durch die beiden Vertiefungen 60 und 62 gebildeten Ausnehmung 28 angeordnet ist. Nachdem dann die Verbindung zwischen dem Unterteil 42 und dem Oberteil 44 mittels eines Klebstoffs als Klebeverbindung oder durch Verschweißen an den Kontaktflächen hergestellt worden ist, befindet sich das Verbindungselement 22 in seinem endgültigen, geschlossenen Zustand. Es ergibt sich schließlich die in Figur 7 gezeigte Einheit aus der Backe 16 und dem Verbindungselement 22, bei der der Endabschnitt 36 und somit die Backe 16 fest mit dem Verbindungselement 22 verbunden ist.

Abweichend vom vorstehend beschriebenen Vorgehen können die Backe 16 und das Verbindungselement 22 zu der in Figur 7 gezeigten Einheit zusammengefügt werden, bevor das Verbindungselement 22 mit dem Glas 2 verklebt wird.

Wie sich aus der vorstehenden Beschreibung des ersten Ausführungsbeispiels des Verbindungselementes 22 und der Benutzung desselben zum Befestigen der Backe 16 am Brillenglas 2 ergibt, liegen im offenen Zustand des Verbindungselementes 22 die Wandflächen 54 und 58 und somit die von diesen begrenzten Vertiefungen 60 und 62 frei. Dementsprechend sind die beiden Vertiefungen 60 und 62 jeweils auf der von ihrem Boden abgewandten Seite und somit oben offen. Der Endabschnitt 38 kann daher von oben, also in Richtung S in Figur 6, in die Vertiefung 60 eingelegt werden. Dies ermöglicht es, der Ausnehmung 28 eine Gestalt mit einer praktisch beliebigen Konturlinie 64 zu geben. Als Konturlinie 64 wird hier der Verlauf der Schnittlinie zwischen der durch die Kontaktflächen 52 und 56 gemeinsam definierten Fläche und der Ausnehmung 28 bezeichnet, also der Verlauf des Randes der Vertiefung 60 und/oder der Vertiefung 62 (siehe Figur 5). Insbesondere ermöglicht dies, der Ausnehmung 28 und dem Endabschnitt 36 jeweils eine Gestalt zu geben, die zu Formschluss zwischen dem Endabschnitt 36 und dem Verbindungselement 22 führt. Bei dem ersten Ausführungsbeispiel ist ein solcher Formschluss dadurch erreicht, dass der Übergangsabschnitt 32 der Ausnehmung 28 eine geringere Querschnittsfläche als deren Hauptabschnitt 34 hat und dass der Übergangsabschnitt 40 des Endabschnitts 36 eine geringere Querschnittsfläche als dessen Hauptabschnitt 38 hat. Aufgrund dieses Formschlusses ist es nicht möglich, den Endabschnitt 36 aus dem geschlossenen Verbindungselement 22 herauszuziehen, und ist der Endabschnitt 36 im Verbindungselement 22 fest verankert.

Es ist nicht notwendig, aber möglich, den Endabschnitt 36 in der Ausnehmung 28 zusätzlich dadurch zu sichern, dass der Endabschnitt 36 mit dem Unterteil 42 und/oder dem Oberteil 44 verklebt wird. Dadurch kann zusätzlich ein allenfalls auftretendes Spiel zwischen dem Endabschnitt 36 und dem Verbindungselement 22 beseitigt werden.

Wenn vorstehend gesagt ist, dass die Ausnehmung 28 mit Ausnahme der Öffnung 30 allseits umschlossen ist, schließt dies nicht aus, dass im Unterteil 42 und/oder im Oberteil 44 eine oder mehrere Öffnungen ausgebildet ist bzw. sind. Eine solche Öffnung kann beispielsweise dem Einbringen von Klebstoff in die Ausnehmung und zwischen die Kontaktflächen dienen.

Im Folgenden werden weitere Ausführungsbeispiele des erfindungsgemäßen Verbindungselementes erläutert. Dabei wird auf die Besonderheiten des jeweiligen Ausführungsbeispiels eingegangen. Im Übrigen gelten die Erläuterungen zum ersten Ausführungsbeispiel sinngemäß.

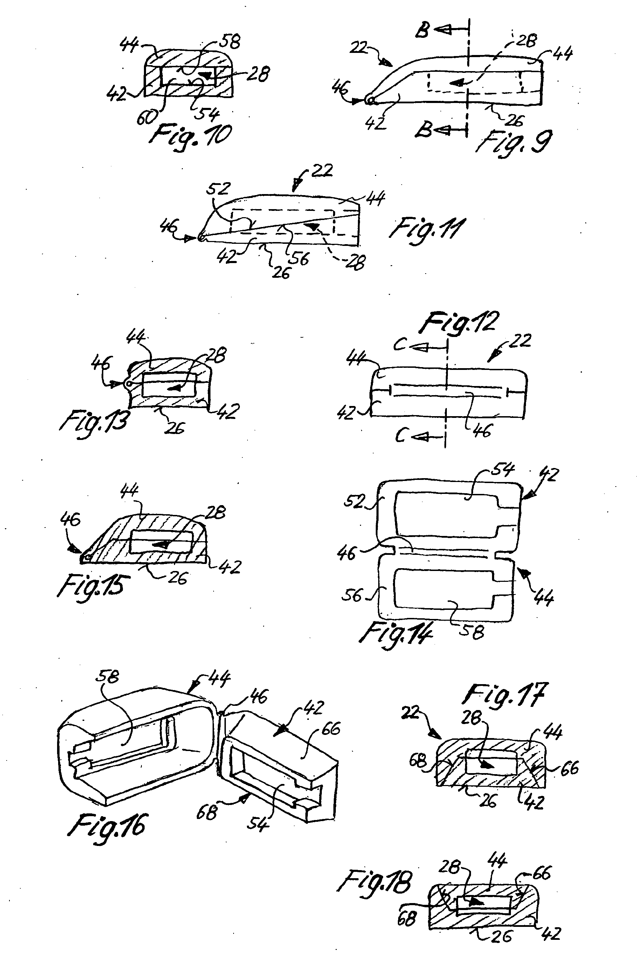

Bei dem ersten Ausführungsbeispiel begrenzt die Wandfläche 54 am Unterteil 42 die Vertiefung 60 und begrenzt die Wandfläche 58 am Oberteil 44 die Vertiefung 62. Abweichend hiervon ist bei dem in den Figuren 9 und 10 gezeigten zweiten Ausführungsbeispiel vorgesehen, dass lediglich die Wandfläche 54 am Unterteil 42 eine Vertiefung, nämlich die Vertiefung 60, begrenzt und dass die Wandfläche 58 am Oberteil 44 keine Vertiefung begrenzt und stufenlos in die Kontaktfläche am Oberteil 44 übergeht. Die Ausnehmung 28 wird in diesem Fall allein durch die Vertiefung 60 gebildet, die am geschlossenen Verbindungselement 22 oben durch die Wandfläche 58 abgeschlossen ist. Bei gleicher Gestalt und gleichen Abmessungen der Ausnehmung 28 wie bei dem ersten Ausführungsbeispiel hat bei dem zweiten Ausführungsbeispiel die Vertiefung 60 eine größere Tiefe. Dies kann das Einlegen des Endabschnitts 36 in die Vertiefung 60 erleichtern.

Bei dem ersten Ausführungsbeispiel weisen die Kontaktflächen 52 und 56 jeweils zwei zueinander geneigte Abschnitte auf. Abweichend davon liegen bei dem in Figur 11 gezeigten dritten Ausführungsbeispiel die Kontaktflächen 52 und 56 in ein und derselben Ebene, die bezüglich der Anlagefläche 26 geneigt und durch das Filmscharnier 46 verläuft. Es ist nicht notwendig, dass die Kontaktflächen 52 und 56 insgesamt oder teilweise parallel zur Anlagefläche 26 verlaufen, und es ist nicht notwendig, dass die Kontaktflächen 52 und 56 vollständig oder teilweise in einer Ebene liegen.

Bei dem ersten Ausführungsbeispiel ist das Filmscharnier 46 auf der der Seite mit der Öffnung 30 gegenüberliegenden Seite des Verbindungselementes 22 angeordnet. Abweichend davon ist das Filmscharnier 46 bei dem in den Figuren 12 bis 14 gezeigten vierten Ausführungsbeispiel auf der an die Seite mit der Öffnung angrenzenden Seite des Verbindungselementes 22 angeordnet. Bei der im Wesentlichen quaderförmigen Gestalt des Verbindungselementes, die in den Figuren 12 bis 14 gezeigt ist, ergibt dies ein Filmscharnier 46 mit größerer Länge. Wie Figur 13 zeigt, ist bei diesem Ausführungsbeispiel das Filmscharnier 46 mit Abstand von der Anlagefläche 26 angeordnet. In Abwandlung davon kann auch bei dem vierten Ausführungsbeispiel das Filmscharnier 46 an die Anlagefläche 26 angrenzend und im wesentlichen in deren Ebene angeordnet sein, wie dies in Figur 15 gezeigt ist.

Die Figuren 16 und 17 zeigen ein fünftes Ausführungsbeispiel des erfindungsgemäßen Verbindungselementes 22, wobei Figur 16 dieses Verbindungselement in perspektivischer Ansicht und in einem offenen Zustand zeigt und Figur 17 einen Schnitt durch das Verbindungselement in zu Figur 3 ähnlicher Darstellung zeigt. Bei dem ersten Ausführungsbeispiel liegen die auf der einen und der anderen Seite der Ausnehmung 28 befindlichen Flächenabschnitte der Kontaktfläche 52 am Unterteil 42 in derselben Ebene. Entsprechendes gilt für die auf der einen und der anderen Seite der Ausnehmung 28 angeordneten Abschnitte der Kontaktfläche 56 am Oberteil 44. Abweichend davon sind bei dem fünften Ausführungsbeispiel die beiderseits der Ausnehmung 28 angeordneten Flächenabschnitte 66 und 68 der Kontaktfläche am Unterteil 42 relativ zueinander geneigt, wobei sie sich jeweils von den Seiten der Ausnehmung 28 aus schräg nach außen und unten in Richtung zu der Anlagefläche 26 und bis zu dieser erstrecken, wie es in Figur 17 gezeigt ist. Dies hat eine Vergrößerung des Flächeninhalts der Flächenabschnitte 66 und 68 und somit eine Vergrößerung des Flächeninhalts der beiden Kontaktflächen zur Folge und erhöht dementsprechend die Festigkeit der Klebe- oder Schweißverbindung zwischen dem Unterteil 42 und dem Oberteil 44. Ferner hat dies zur Folge, dass die äußeren Ränder der Kontaktflächen an den Längsseiten des Verbindungselementes 22 nicht sichtbar sind.

In Abwandlung des fünften Ausführungsbeispiels können die Flächenabschnitte 66 und 68 statt schräg nach außen und unten schräg nach außen und oben, d. h. in Richtung zur Außenfläche des Oberteils 44 verlaufen, wie dies in Figur 18 gezeigt ist. Auch in diesem Fall wird eine Vergrößerung des Flächeninhalts der Flächenabschnitte 66 und 68 erreicht.

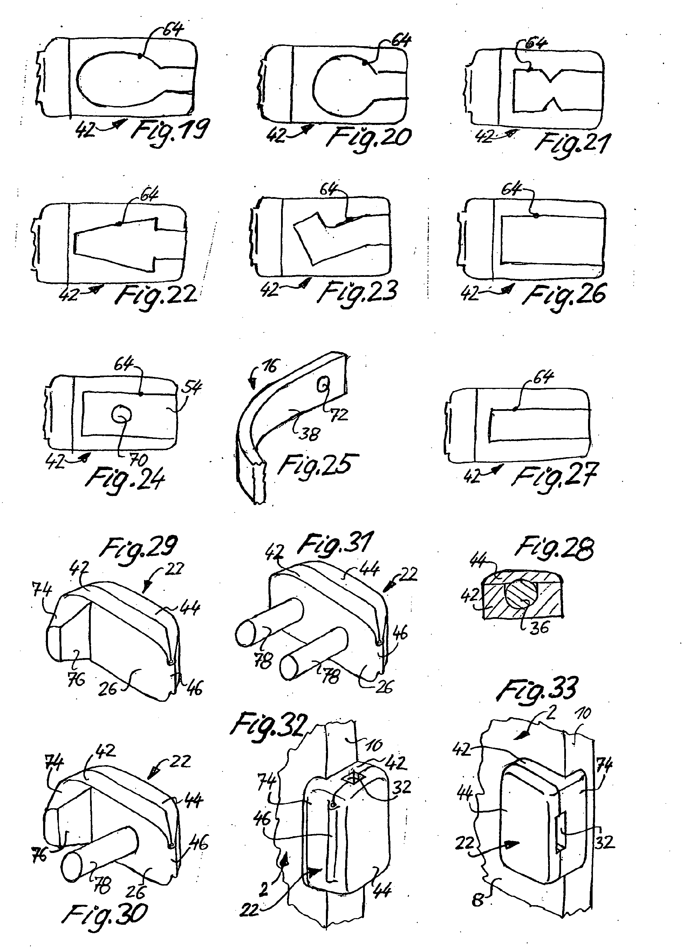

Bei dem ersten Ausführungsbeispiel besteht die Ausnehmung 28 aus dem quaderförmigen Hauptabschnitt 34 und dem verengten Übergangsabschnitt 32, so dass sich die in Figur 5 gezeigte Konturlinie 64 ergibt, die für den Hauptabschnitt 34 ein Rechteck ist, von dessen einer Schmalseite zwei Geraden ausgehen, die die Kontur im Bereich des Übergangsabschnitts 32 definieren. Die Figuren 19 bis 24 zeigen Beispiele für weitere mögliche Gestalten der Ausnehmung 28, wobei in diesen Figuren in zu Figur 5 ähnlicher Darstellung lediglich das Unterteil 42 in Draufsicht mit der jeweiligen Konturlinie 64 gezeigt ist.

Bei dem Beispiel gemäß Figur 19 ist die Konturlinie 64 für den Hauptabschnitt der Ausnehmung ein Oval. Dementsprechend haben der Hauptabschnitt der Ausnehmung und der Hauptabschnitt des Endabschnitts die Gestalt einer Platte mit ovalem Umriss. Bei dem Beispiel gemäß Figur 2 ist die Konturlinie 64 für den Hauptabschnitt der Ausnehmung ein Kreis. Dementsprechend haben die Hauptabschnitte von Ausnehmung und Endabschnitt die Gestalt einer flachen Platte mit kreisförmigem Umriss. Bei dem Beispiel gemäß Figur 21 ist die Konturlinie 64 ein einseitig offenes Rechteck mit einander zugewandten Zacken an den Längsseiten des Rechtecks. Dementsprechend haben die Ausnehmung und der Endabschnitt die Gestalt eines flachen Quaders mit Einkerbungen an dessen Langseiten. Bei dem Beispiel gemäß Figur 22 ist die Konturlinie 64 für den Hauptabschnitt der Ausnehmung ein Trapez. Dementsprechend haben die Hauptabschnitte von Ausnehmung und Endabschnitt die Gestalt einer Platte mit trapezförmigem Umriss. Bei dem Beispiel gemäß Figur 23 ergibt die Konturlinie 64 eine Ausnehmung mit drei aufeinanderfolgenden Abschnitten, die in nicht gerader Verlängerung voneinander angeordnet sind. Diese Ausnehmung ist zur Aufnahme eines hakenförmig abgebogenen Endabschnitts bestimmt. Bei dem Ausführungsbeispiel gemäß Figur 24 ist die Konturlinie 64 ein einseitig offenes Rechteck und umfasst die Wandfläche 54 die Oberfläche eines Stiftes 70, der am Unterteil 42 angeformt ist und in die Ausnehmung 28 ragt. Der zugeordnete Endabschnitt 38 ist in Figur 25 gezeigt und weist ein Loch 72 auf, das zum Eingriff mit dem Stift 70 bestimmt ist.

Die vorstehend anhand der Figuren 19 bis 25 erläuterten Gestalten der Ausnehmung und des Endabschnitts zeigen, dass es für diese zahlreiche verschiedene Gestaltungsmöglichkeiten gibt, wobei diese nicht auf die erläuterten Beispiele und die Gestalten des Endabschnitts und der Ausnehmung des ersten Ausführungsbeispiels beschränkt sind. Für jede dieser Gestaltungsmöglichkeiten gilt und ist erkennbar, dass sie zu einer formschlüssigen Verbindung zwischen dem Endabschnitt 36 und somit der Backe 16 einerseits und dem Verbindungselement 22 andererseits führt.

Die Figuren 26 und 27 zeigen weitere Beispiele für mögliche Gestalten der Ausnehmung in gleicher Darstellung wie die Figuren 19 bis 24. Bei dem Beispiel gemäß Figur 26 ist die Konturlinie 64 ein einseitig offenes Rechteck. Dementsprechend haben die Ausnehmung und der Endabschnitt die Gestalt eines flachen Quaders. Bei dem Beispiel gemäß Figur 27 ist die Konturlinie 64 ebenfalls ein einseitig offenes Rechteck. In diesem Fall ist die Ausnehmung eine durch das Oberteil 44 oben geschlossene, im Wesentlichen durch die Vertiefung im Unterteil 42 gebildete Wanne (siehe Figur 28), die zur Aufnahme eines kreiszylindrischen Endabschnitts 36 bestimmt ist. Bei den Beispielen gemäß den Figuren 26 bis 28 wird ein Formschluss zwischen dem Endabschnitt und dem Verbindungselement nicht erreicht und muss der Endabschnitt in der Ausnehmung mittels eines Klebstoffs fixiert werden. Das erfindungsgemäße Verbindungselement ist jedoch auch dann vorteilhaft, wenn die Ausnehmung und der Endabschnitt gemäß den in Figuren 26 bis 28 gezeigten Beispielen gestaltet sind, weil das erfindungsgemäße Verbindungselement es in seinem geöffneten Zustand erleichtert, Klebstoff in geeigneter Menge und an geeignetem Ort in eine die Ausnehmung bildende Vertiefung einzubringen.

Das in Figur 29 dargestellte sechste Ausführungsbeispiel des erfindungsgemäßen Verbindungselementes 22 unterscheidet sich von dem ersten Ausführungsbeispiel dadurch, dass am Unterteil 42 ein Vorsprung 74 angeformt ist, der eine zweite Anlagefläche 76 aufweist, die im Wesentlichen senkrecht zu der ersten Anlagefläche 26 verläuft. Die zweite Anlagefläche 76 ist dazu bestimmt, am Rand 10 des Brillenglases 2 anzuliegen und gegebenenfalls mit dem Rand 10 verklebt zu werden. Der Vorsprung 74 und seine Anlagefläche 76 erleichtern das Positionieren des Verbindungselementes 22 am Brillenglas 2, und die zweite Anlagefläche 76 vergrößert die insgesamt zum Verkleben mit dem Brillenglas verfügbare Fläche.

Das in Figur 30 dargestellte siebente Ausführungsbeispiel des erfindungsgemäßen Verbindungselementes 22 unterscheidet sich von dem sechsten Ausführungsbeispiel gemäß Figur 29 dadurch, dass zusätzlich am Unterteil 42 ein von der ersten Anlagefläche 26 vorstehender Stift 78 angeformt ist. Das Verbindungselement 22 gemäß dem siebenten Ausführungsbeispiel ist zum Befestigen an einem Brillenglas bestimmt, das ein Loch zur Aufnahme des Stiftes 78 aufweist. Der freie Kopf des Stiftes 78 wird dabei auf der von der ersten Anlagefläche 26 abgewandten Seite des Brillenglases abgeflacht, um das Verbindungselement 22 am Brillenglas zu fixieren. Alternativ kann der Stift 78 in dem Loch des Brillenglases verklebt werden.

Das in Figur 31 gezeigte achte Ausführungsbeispiel des erfindungsgemäßen Verbindungselementes 22 unterscheidet sich von dem siebenten Ausführungsbeispiel dadurch, dass es zwei am Unterteil 42 angeformte und von der Anlagefläche 26 vorstehende Stifte 78 aufweist und den Vorsprung 76 nicht aufweist. Die zwei Stifte 78 dieses Verbindungselementes 22 dienen in gleicher Weise der Fixierung des Verbindungselementes 22 am Brillenglas wie der eine Stift 78 des siebenten Ausführungsbeispiels.

Für die Verbindungselemente 22 gemäß den ersten bis achten Ausführungsbeispielen ist vorstehend beschrieben, dass diese mit ihrer (ersten) Anlagefläche 26 an der Vorderseite 8 des Brillenglases 2 anliegen und mit diesem verklebt werden. Alternativ können diese Verbindungselemente 22 statt an der Vorderseite 8 an der Rückseite des Brillenglases 2 angesetzt und mit dem Brillenglas 2 verklebt werden.

Das erfindungsgemäße Verbindungselement 22 kann an seiner (ersten) Anlagefläche nicht nur mit der Vorder- oder Rückseite des Brillenglases verklebt werden, sondern auch mit dessen Rand 10. Dies ist bei dem neunten Ausführungsbeispiel des Verbindungselementes 22 in Figur 32 gezeigt. Das Verbindungselement 22 gemäß diesem Ausführungsbeispiel liegt mit seiner in Figur 32 nicht sichtbaren ersten Anlagefläche am Rand 10 des Brillenglases 2 an und ist mit dem Rand 10 verklebt. Ähnlich wie das Verbindungselement 22 gemäß dem sechsten Ausführungsbeispiel weist das Verbindungselement 22 gemäß dem neunten Ausführungsbeispiel den Vorsprung 74 auf, der in diesem Fall mit seiner zweiten, in Figur 32 nicht sichtbaren Anlagefläche an der Rückseite des Brillenglases 2 anliegt.

Wie Figur 7 zeigt, erstreckt sich das quaderförmige Verbindungselement 22 gemäß dem ersten Ausführungsbeispiel mit seiner größten Länge (der größten Seitenlänge der im Wesentlichen rechteckigen Seiten des quaderförmigen Elementes) im Wesentlichen horizontal, d.h. von der Backe 16 aus in Richtung zur Brücke 6 der Brille, und in Verlängerung der Backe 16. Abweichend davon kann das Verbindungselement 22 derart ausgebildet sein und am Brillenglas sowie der Backe derart angeordnet werden, dass sich das quaderförmige Verbindungselement 22 mit seiner größten Länge in vertikaler Richtung und quer zu der Längsachse der Backe erstreckt. Dies ist bei dem zehnten Ausführungsbeispiel des Verbindungselementes 22 in Figur 33 gezeigt. Das Verbindungselement 22 gemäß diesem Ausführungsbeispiel liegt mit seiner in Figur 33 nicht sichtbaren ersten Anlagefläche an der Vorderseite 8 des Brillenglases an und ist mit der Vorderseite 8 verklebt. Ähnlich wie das Verbindungselement 22 gemäß dem sechsten Ausführungsbeispiel weist das Verbindungselement 22 gemäß dem zehnten Ausführungsbeispiel den Vorsprung 74 auf, der in diesem Fall mit seiner zweiten, in Figur 33 nicht sichtbaren Anlagefläche am Rand 10 des Brillenglases 2 anliegt und mit dem Rand 10 verklebt sein kann. Das Filmscharnier, das das Unterteil 42 und das Oberteil 44 miteinander verbindet, ist in Figur 33 nicht sichtbar und befindet sich auf derjenigen Seite des quaderförmigen Verbindungselementes 22, die der Seite mit der Öffnung der Ausnehmung gegenüberliegt, von der in Figur 33 der Übergangsabschnitt 32 sichtbar ist. In Horizontalrichtung ist das Verbindungselement 22 gemäß dem zehnten Ausführungsbeispiel kürzer als in der Vertikalrichtung, und es ist in Horizontalrichtung kürzer als das Verbindungselement gemäß dem ersten Ausführungsbeispiel. Das Verbindungselement 22 gemäß dem zehnten Ausführungsbeispiel beeinträchtigt daher weniger das Gesichtsfeld des Brillenträgers als solche Verbindungselemente, deren größte Länge sich in Horizontalrichtung erstreckt.

In den Figuren 29 bis 33 ist das Verbindungselement 22 jeweils in seinem geschlossenen Zustand dargestellt, wobei jedoch der Endabschnitt des Bügels bzw. der Backe weggelassen ist.

Bei allen vorstehend beschriebenen Ausführungsbeispielen sind das Unterteil 42 und das Oberteil 44 mittels des Filmscharniers 46 gelenkig miteinander verbunden. Das erfindungsgemäße Verbindungselement weist zwar vorzugsweise das Filmscharnier auf. Es ist jedoch auch möglich, das Filmscharnier wegzulassen und das Oberteil und das Unterteil zunächst als separate, nicht miteinander verbundene Teile zu fertigen. In diesem Fall werden das Oberteil und das Unterteil nicht relativ zueinander verschwenkt, um den geschlossenen Zustand des Verbindungselements herbeizuführen, sondern wird das Oberteil auf das Unterteil aufgesetzt oder wird das Unterteil auf das Oberteil aufgesetzt. Bei ansonsten gleicher Ausbildung des Verbindungselementes, wie sie vorstehend anhand der Ausführungsbeispiele beschrieben ist, ergibt sich auch in diesem Fall die feste Verankerung des Endabschnitts in der Ausnehmung.

Die Merkmale der vorstehend beschriebenen Ausführungsbeispiele können miteinander kombiniert werden, sofern eine Kombination wegen Widersprüchlichkeit nicht ausgeschlossen ist.

Die Erfindung ist nicht auf die vorstehend beschriebenen Ausführungsbeispiele beschränkt.

Das erfindungsgemäße Verbindungselement 22 zum Verbinden einer Backe oder einer Brücke mit einem Brillenglas 2 einer randlosen Brille ist aus einem spritzgießfähigen Kunststoff gebildet und ist in ein Unterteil 42 und ein Oberteil 44 unterteilt. Das Oberteil 44 und das Unterteil 42 sind vorzugsweise mittels eines Filmscharniers 46 miteinander verbunden. Das Unterteil 42 ist an dem Brillenglas 2 befestigbar und weist eine Anlagefläche 26 auf, die zur Anlage am Rand 10 und/oder an der Rück- oder Vorderseite 8 des Brillenglases 2 bestimmt ist. Das Oberteil 44 und das Unterteil 42 weisen jeweils eine Innenfläche 48 bzw. 50 auf, wobei diese Innenflächen einander zugewandt sind und jeweils eine Kontaktfläche 52 bzw. 56 und eine Wandfläche 54 bzw. 58 aufweisen. Die Kontaktflächen 52 und 56 sind komplementär zueinander ausgebildet, und das Oberteil 44 und das Unterteil 42 sind an ihren Kontaktflächen 52 und 56 miteinander verbunden. Die Wandflächen 54 und 58 begrenzen gemeinsam eine Ausnehmung 28 innerhalb des Verbindungselementes, die an einer Öffnung 30 nach außerhalb des Verbindungselementes offen ist. Die Ausnehmung 28 ist zur Aufnahme eines Endabschnitts 36 der Backe 16 oder der Brücke 6 bestimmt. Bevor das Unterteil 42 und das Oberteil 44 an ihren Kontaktflächen 52 und 56 miteinander verbunden werden, können sie eine Relativstellung einnehmen, in der die Ausnehmung 28 geöffnet ist und die beiden die Ausnehmung begrenzenden Wandflächen 54 und 58 jeweils freiliegen. In diesem Zustand kann der Endabschnitt 36 der Backe 16 bzw. der Brücke 6 zwischen das Unterteil 42 und das Oberteil 44 eingelegt werden, wonach das Unterteil 42 und das Oberteil 44 in Kontakt miteinander gebracht werden und an ihren Kontaktflächen 52 und 56 fest miteinander verbunden werden, wodurch der Endabschnitt 36 fest in der Ausnehmung 28 eingeschlossen und verankert wird. Weil der Endabschnitt 36 zwischen das Unterteil 42 und das Oberteil 44 eingelegt wird, können die Ausnehmung 28 und der dazu komplementär geformte Endabschnitt 36 jeweils eine Gestalt haben, die für eine feste Verbindung zwischen dem Endabschnitt und dem Verbindungselement bzw. für eine feste Verankerung des Endabschnitts im Verbindungselement sorgt.

## Patentansprüche

1. Verbindungselement zum Verbinden einer Backe (16) oder einer Brücke (6) mit einem Brillenglas (2) einer randlosen Brille, wobei das Verbindungselement aufweist
eine Ausnehmung (28) zur Aufnahme eines Endabschnitts (36) der Backe (16) oder der Brücke (6) und eine Anlagefläche (26), die zur Anlage am Rand (10) und/oder an der Rück- oder Vorderseite (8) des Brillenglases (2) bestimmt ist,
wobei die Ausnehmung (28) eine Öffnung (30) aufweist, und
wobei das Verbindungselement (22) aus spritzgießfähigem Kunststoff gebildet ist,
**dadurch gekennzeichnet,**
**dass** das Verbindungselement in ein Unterteil (42), an dem die Anlagefläche (26) ausgebildet ist, und ein Oberteil (44) unterteilt ist, wobei das Oberteil (44) und das Unterteil (42) jeweils eine Innenfläche (48, 50) aufweisen und die beiden Innenflächen (48, 50) einander zugewandt sind, und
**dass** die beiden Innenflächen (48, 50) jeweils eine Kontaktfläche (52, 56) und eine Wandfläche (54, 58) aufweisen, wobei die Kontaktflächen (52, 56) komplementär zueinander ausgebildet sind und das Oberteil (44) und das Unterteil (42) an ihren Kontaktflächen (52, 56) miteinander verbunden sind und wobei die Wandflächen (54, 58) gemeinsam die Ausnehmung (28) begrenzen.

2. Verbindungselement nach Anspruch 1, **dadurch gekennzeichnet, dass** es im Wesentlichen die Form eines Quaders hat, wobei die Anlagefläche (26) eine Unterseite des Quaders bildet, wobei die Außenfläche des Oberteils (44) die Oberseite des Quaders bildet und wobei in einer der vier übrigen Seiten des Quaders die Öffnung (30) der Ausnehmung (28) ausgebildet ist.

3. Verbindungselement nach Anspruch 1 oder 2, **dadurch gekennzeichnet,**
**dass** das Oberteil (44) und das Unterteil (42) mittels eines Filmscharniers (46) gelenkig miteinander derart verbunden sind, dass das Oberteil (44) vor der Herstellung der Verbindung zwischen den beiden Kontaktflächen (52, 56) relativ zum Unterteil (42) verschwenkbar ist.

4. Verbindungselement nach den Ansprüchen 2 und 3, **dadurch gekennzeichnet, dass** das Filmscharnier (46) im Bereich derjenigen der übrigen Seiten des Quaders angeordnet ist, die der Seite mit der Öffnung (30) gegenüberliegt.

5. Verbindungselement nach den Ansprüchen 2 und 3, **dadurch gekennzeichnet, dass** das Filmscharnier (46) im Bereich einer derjenigen der übrigen Seiten des Quaders angeordnet ist, die an die Seite mit der Öffnung (30) angrenzen.

6. Verbindungselement nach einem der Ansprüche 3 bis 5, **dadurch gekennzeichnet, dass** das Filmscharnier (46) im Wesentlichen am Rand der Anlagefläche (26) angeordnet ist.

7. Verbindungselement nach einem der Ansprüche 3 bis 6, **dadurch gekennzeichnet, dass** das Oberteil (44), das Unterteil (42) und das Filmscharnier (46) einstückig miteinander ausgebildet sind.

8. Verbindungselement nach einem der Ansprüche 1 bis 7, **dadurch gekennzeichnet, dass** das Oberteil (44) und das Unterteil (42) aus einem flexiblen Kunststoff mit geringer Härte bestehen.

9. Verbindungselement nach Anspruch 8, **dadurch gekennzeichnet, dass** die Härte des Kunststoffs im Bereich von 40 bis 60 Shore D liegt.

10. Verbindungselement nach Anspruch 8 oder 9, **dadurch gekennzeichnet, dass** der Kunststoff ein aliphatisches, thermoplastisches Polyether-Polyurethan ist.

11. Verbindungselement nach einem der Ansprüche 1 bis 10, **dadurch gekennzeichnet, dass** das Oberteil (44) und das Unterteil (42) an ihren Kontaktflächen (52, 56) mittels eines Klebstoffs miteinander verbunden sind.

12. Verbindungselement nach einem der Ansprüche 1 bis 10, **dadurch gekennzeichnet, dass** das Oberteil (44) und das Unterteil (42) an ihren Kontaktflächen (52, 56) miteinander verschweißt sind.

13. Verbindungselement nach einem der Ansprüche 1 bis 12, **dadurch gekennzeichnet, dass** im Oberteil (44) und im Unterteil (42) jeweils eine von der jeweiligen Wandfläche (54, 58) begrenzte Vertiefung(60, 62) ausgebildet ist und dass die Vertiefungen zusammen die Ausnehmung (28) bilden.

14. Verbindungselement nach einem der Ansprüche 1 bis 13, **dadurch gekennzeichnet, dass** jede der Kontaktflächen (52, 56) Flächenabschnitte (66, 68) aufweist, die auf der einen und der anderen Seite der Ausnehmung (28) angeordnet sind und relativ zueinander geneigt sind.

15. Verbindungselement nach Anspruch 14, **dadurch gekennzeichnet, dass** die Flächenabschnitte (66, 68) sich von den Seiten der Ausnehmung (28) aus schräg nach außen in Richtung zu der Anlagefläche (26) erstrecken.

16. Verbindungselement nach Anspruch 15, **dadurch gekennzeichnet, dass** die Flächenabschnitte (66, 68) sich bis zu der Anlagefläche (26) erstrecken.

17. Verbindungselement nach einem der Ansprüche 1 bis 16, **dadurch gekennzeichnet, dass** die Ausnehmung (28) eine solche Gestalt hat, dass der Endabschnitt (36), wenn er im Wesentlichen komplementär zur Ausnehmung (28) gestaltet ist, formschlüssig im Verbindungselement gehalten wird.

18. Verbindungselement nach einem der Ansprüche 1 bis 17, **dadurch gekennzeichnet, dass** am Unterteil (42) ein Vorsprung (74) angeformt ist, der zur Anlage am Rand (10) des Brillenglases (2) bestimmt ist.

19. Verbindungselement nach einem der Ansprüche 1 bis 18, **dadurch gekennzeichnet, dass** am Unterteil (42) ein von der Anlagefläche (26) vorstehender Stift (78) angeformt ist, der zum Eingriff mit einem Loch im Brillenglas (2) bestimmt ist.

## Claims

1. A connecting element for connecting a side connector (16) or a bridge (6) to a spectacles lens (2) of rimless spectacles, wherein the connecting element has
a recess (28) for receiving an end portion (36) of the side connector (16) or the bridge (6) and a contact surface (26) which is intended to bear against the edge (10) and/or the rear or front side (8) of the spectacles lens (2),
wherein the recess (28) has an opening (30), and
wherein the connecting element (22) is formed from injection-mouldable plastic material,
**characterised in that**
the connecting element is subdivided into a lower portion (42) on which the contact surface (26) is provided and an upper portion (44), wherein the upper portion (44) and the lower portion (42) each have a respective inside surface (48, 50) and the two inside surfaces (48, 50) are facing towards each other, and
the two inside surfaces (48, 50) each have a contact surface (52, 56) and a wall surface (54, 58), wherein the contact surfaces (52, 56) are of a mutually complementary configuration and the upper portion (44) and the lower portion (42) are connected together at their contact surfaces (52, 56) and wherein the wall surfaces (54, 58) jointly define the recess (28).

2. A connecting element according to claim 1 **characterised in that** it is substantially in the form of a rectangular parallelepiped, wherein the contact surface (26) forms an underside of the parallelepiped, wherein the outside surface of the upper portion (44) forms the top side of the parallelepiped and wherein the opening (30) of the recess (28) is provided in one of the other four sides of the parallelepiped.

3. A connecting element according to claim 1 or claim 2 **characterised in that** the upper portion (44) and the lower portion (42) are pivotably connected together by means of a film hinge (46) in such a way that the upper portion (44) is pivotable relative to the lower portion (42) prior to the connection being made between the two contact surfaces (52, 56).

4. A connecting element according to claims 2 and 3 **characterised in that** the film hinge (46) is arranged in the region of that one of the other sides of the parallelepiped, that is opposite to the side having the opening (30).

5. A connecting element according to claims 2 and 3 **characterised in that** the film hinge (46) is arranged in the region of one of those of the other sides of the parallelepiped, that adjoin the side having the opening (30).

6. A connecting element according to one of claims 3 to 5 **characterised in that** the film hinge (46) is arranged substantially at the edge of the contact surface (26).

7. A connecting element according to one of claims 3 to 6 **characterised in that** the upper portion (44), the lower portion (42) and the film hinge (46) are provided integrally with each other.

8. A connecting element according to one of claims 1 to 7 **characterised in that** the upper portion (44) and the lower portion (42) comprise a flexible plastic material of low hardness.

9. A connecting element according to claim 8 **characterised in that** the hardness of the plastic material is in the region of 40 to 60 Shore D.

10. A connecting element according to claim 8 or claim 9 **characterised in that** the plastic material is an aliphatic thermoplastic polyether polyurethane.

11. A connecting element according to one of claims 1 to 10 **characterised in that** the upper portion (44) and the lower portion (42) are connected together at their contact surfaces (52, 56) by means of an adhesive.

12. A connecting element according to one of claims 1 to 10 **characterised in that** the upper portion (44) and the lower portion (42) are welded together at their contact surfaces (52, 56).

13. A connecting element according to one of claims 1 to 12 **characterised in that** a respective depression (60, 62) defined by the respective wall surface (54, 58) is provided in the upper portion (44) and in the lower portion (42) and the depressions together form the recess (28).

14. A connecting element according to one of claims 1 to 13 **characterised in that** each of the contact surfaces (52, 56) has surface portions (66, 68) which are arranged on the one side of the recess (28) and the other side and are inclined relative to each other.

15. A connecting element according to claim 14 **characterised in that** the surface portions (66, 68) extend from the sides of the recess (28) inclinedly outwardly in a direction towards the contact surface (26).

16. A connecting element according to claim 15 **characterised in that** the surface portions (66, 68) extend to the contact surface (26).

17. A connecting element according to one of claims 1 to 16 **characterised in that** the recess (28) is of such a configuration that the end portion (36) is held in the connecting element in positively locking relationship when the end portion is of a substantially complementary configuration to the recess (28).

18. A connecting element according to one of claims 1 to 17 **characterised in that** formed on the lower portion (42) is a projection (74) which is intended to bear against the edge (10) of the spectacles lens (2).

19. A connecting element according to one of claims 1 to 18 **characterised in that** formed on the lower portion (42) is a pin (78) which projects from the contact surface (26) and which is intended to engage with a hole in the spectacles lens (2).

## Revendications

1. Elément de liaison pour relier une joue d'articulation de branche (16) ou un pont nasal (6) à un verre de lunettes (2) de lunettes dites à monture invisible, l'élément de liaison présentant,
un évidement (28) pour recevoir un tronçon d'extrémité (36) de la joue d'articulation de branche (16) ou du pont nasal (6), et une surface d'appui (26), qui est destinée à venir s'appuyer sur le bord (10) et/ou sur la face arrière ou la face avant (8) du verre de lunettes (2),
l'évidement (28) présentant une ouverture (30),
et l'élément de liaison (22) étant réalisé en une matière synthétique ou matière plastique susceptible d'être moulée par injection,
**caractérisé**
**en ce que** l'élément de liaison est subdivisé en une partie inférieure (42) sur laquelle est formée la surface d'appui (26), et en une partie supérieure (44), la partie supérieure (44) et la partie inférieure (42) présentant chacune une surface intérieure (48, 50), et les deux surfaces intérieures (48, 50) étant dirigées l'une vers l'autre, et
**en ce que** les deux surfaces intérieures (48, 50) présentent chacune respectivement une surface de contact (52, 56) et une surface de paroi (54, 58), les surfaces de contact (52, 56) étant de configuration mutuellement complémentaire, et la partie supérieure (44) et la partie inférieure (42) étant reliées l'une à l'autre au niveau de leur surfaces de contact (52, 56), et les surfaces de paroi (54, 58) délimitant en commun l'évidement (28).

2. Elément de liaison selon la revendication 1,
**caractérisé en ce qu'**il présente sensiblement la forme d'un parallélépipède, la surface d'appui (26) formant un côté inférieur du parallélépipède, la face extérieure de la partie supérieure (44) formant le côté supérieur du parallélépipède, et l'ouverture (30) de l'évidement (28) étant réalisée dans l'un des quatre côtés restants du parallélépipède.

3. Elément de liaison selon la revendication 1 ou la revendication 2,
**caractérisé en ce que** la partie supérieure (44) et la partie inférieure (42) sont reliées l'une à l'autre de manière articulée, au moyen d'une charnière à film (46), de façon telle que la partie supérieure (44) puisse pivoter par rapport à la partie inférieure (42) avant l'établissement de la liaison entre les deux surfaces de contact (52, 56).

4. Elément de liaison selon les revendications 2 et 3,
**caractérisé en ce que** la charnière à film (46) est agencée dans la zone de celui des côtés restants du parallélépipède, qui est opposé au côté comprenant l'ouverture (30).

5. Elément de liaison selon les revendications 2 et 3,
**caractérisé en ce que** la charnière à film (46) est agencée dans la zone de l'un de ceux des côtés restants du parallélépipède, qui sont adjacents au côté comprenant l'ouverture (30).

6. Elément de liaison selon l'une des revendications 3 à 5,
**caractérisé en ce que** la charnière à film (46) est agencée sensiblement au bord de la surface d'appui (26).

7. Elément de liaison selon l'une des revendications 3 à 6,
**caractérisé en ce que** la partie supérieure (44), la partie inférieure (42) et la charnière à film (46) sont réalisées ensemble, d'un seul tenant.

8. Elément de liaison selon l'une des revendications 1 à 7,
**caractérisé en ce que** la partie supérieure (44) et la partie inférieure (42) sont réalisées en une matière synthétique ou matière plastique flexible, de faible dureté.

9. Elément de liaison selon la revendication 8,
**caractérisé en ce que** la dureté de la matière plastique se situe dans une plage de 40 à 60 Shore D.

10. Elément de liaison selon la revendication 8 ou la revendication 9,
**caractérisé en ce que** la matière plastique est un polyéther-polyuréthanne aliphatique, thermoplastique.

11. Elément de liaison selon l'une des revendications 1 à 10,
**caractérisé en ce que** la partie supérieure (44) et la partie inférieure (42) sont reliées l'une à l'autre au niveau de leurs surfaces de contact (52, 56), au moyen d'une colle.

12. Elément de liaison selon l'une des revendications 1 à 10,
**caractérisé en ce que** la partie supérieure (44) et la partie inférieure (42) sont soudées l'une à l'autre au niveau de leurs surfaces de contact (52, 56).

13. Elément de liaison selon l'une des revendications 1 à 12,
**caractérisé en ce que** dans la partie supérieure (44) et dans la partie inférieure (42) est réalisée respectivement une cavité (60, 62) délimitée par la surface de paroi (54, 58) respective, et **en ce que** les cavités forment ensemble l'évidement (28).

14. Elément de liaison selon l'une des revendications 1 à 13,
**caractérisé en ce que** chacune des surfaces de contact (52, 56) présente des tronçons de surface (66, 68), qui sont agencés sur l'un et sur l'autre côté de l'évidement (28), et sont inclinés l'un par rapport à l'autre.

15. Elément de liaison selon la revendication 14,
**caractérisé en ce que** les tronçons de surface (66, 68) s'étendent, en partant des côtés de l'évidement (28), de manière inclinée vers l'extérieur en direction de la surface d'appui (26).

16. Elément de liaison selon la revendication 15,
**caractérisé en ce que** les tronçons de surface (66, 68) s'étendent jusqu'à la surface d'appui (26).

17. Elément de liaison selon l'une des revendications 1 à 16,
**caractérisé en ce que** l'évidement (28) présente une configuration telle que le tronçon d'extrémité (36), lorsqu'il est d'une configuration sensiblement complémentaire à l'évidement (28), soit maintenu par complémentarité de formes dans l'élément de liaison.

18. Elément de liaison selon l'une des revendications 1 à 17,
**caractérisé en ce que** sur la partie inférieure (42) est formée une protubérance (74), qui est destinée à venir en appui contre le bord (10) du verre de lunettes (2).

19. Elément de liaison selon l'une des revendications 1 à 18,
**caractérisé en ce que** sur la partie inférieure (42) est formé un tenon (78) qui fait saillie de la surface d'appui (26), et est destiné à venir en prise dans un trou du verre de lunettes (2).
